# EUROPEAN PATENT SPECIFICATION

(11) **EP 2 859 794 B1**
(45) Date of publication and mention of the grant of the patent: **21.12.2016**
(21) Application number: 13187690.6
(22) Date of filing: 08.10.2013
(51) Int. Cl.: A01M 29/12, A01M 1/20, A01M 29/34, A01N 63/04

(54) **A complex of structures for delivering pesticidal agents to arthropods**
Komplex von Strukturen zur Abgabe von Pestiziden an Arthropoda
Complexe de structures permettant l'administration d'agents pesticides aux arthropodes

(43) Date of publication of application: 15.04.2015
(73) Proprietor: In2Care Holding B.V., 6709 PG WAGENINGEN (NL)
(72) Inventor: Osinga, Anne Jurjen, 3235 AC Rockanje (NL); Suer, Remco Alexander, 6871 SE Renkum (NL); Farenhorst, Marit, 6702 BW Wageningen (NL); Knols, Bart Geert Jan, 6669 CP Dodewaard (NL); Thomas, Matthew, State College, PA Pennsylvania PA 16803 (US); Heinig, Rebecca, State College, PA Pennsylvania PA 16803 (US); Sternberg, Eleanore, State College, PA Pennsylvania PA 16801 (US); Rose, Andreas, 93053 Regensburg (DE); Cordel, Michael, 93059 Regensburg (DE); Hartmann, Patrick, 9810 Eke-Nazareth (BE); De Schietere, Johan, 9920 Lovendegem (BE); Ng'habi, Kija, Ifakara (TZ); Lyimo, Issa, Ifakara (TZ); Okumu, Fredros, Ifakara (TZ); Mnyone, Ladslaus, Ifakara (TZ)
(74) Representative: Klavers, Cornelis

(56) References cited:
- WO-A1-90/10389
- WO-A1-03/051112
- WO-A1-2009/048324
- WO-A2-2011/003861

## Description

The present invention relates to 1) a mesh structure in the form of a gauze, net, cloth, screen, grid or fabric, into and/or onto which (bio)pesticidal agents are applied, and to the use thereof to seal holes as a means to intercept mosquitoes or other flying or crawling insects before entering the domicile, hut, or other accommodations for humans and/or livestock, and killing these upon or after contact with the agents; 2) the incorporation of such a mesh structure into and/or onto novel delivery systems here described, specifically protectoral structures like bednets, eave screens, eave 'tubes' or 'bricks', or traps, and 3) a novel coating that can be directly sprayed, painted, coated, or otherwise applied on various substrates like clay, mud, loam, wood, brick, stone, iron and fabric whereon one or more (bio)pesticides in powder formulation can adhere.

Known ways to reduce contact with blood-feeding arthropods are measures like installing bednets, insect screens or mesh structures around sleeping and/or resting places, or in eaves, windows, and/or door openings. Chemical pesticides are impregnated therein or coated thereon to which arthropods are however normally capable of developing a resistance to. This makes these measures less effective over time.

WO 2011/003861 discloses a mesh structure in the form of a gauze, net, cloth, screen, grid or fabric on to which one or more chemical, physical or biologically active agents are provided comprising WHO-recommended insecticides, such a pyrethroid effective against mosquitoes and other flying insects, and/or insecticides, such a chlorfenapyr from other insecticide classes than recommended by WHO.

It is an object of the present invention to provide an improved complex of measures for contending blood-feeding arthropods, in particular mosquitoes, more effectively.

Thereto the mesh structure according to the invention has the features outlined in claim 1.

It is an advantage of the mesh structure according to the present invention that arthropods landing, walking, crawling, and/or resting on the structure get contaminated with one or more pesticidal agents or powder(s) on the legs, body, head and/or wings before taking off. These (bio)pesticides, individually or in mixtures comprising two or more actives, can be divided according to their killing mechanism: 'immediate kill' (that is, at least 87% kill within 24 hours after exposure) or 'slow kill' (within 10 days after exposure). 'Immediate kill' has the advantage of showing instantly visible results (i.e. dead specimens) but puts a large selection pressure on the target pest to develop resistance against the pesticide. 'Slow kill' has the advantage that resistance build up is much slower and it provides the opportunity to combine pesticides that can target arthropods, especially mosquitoes, in various stages of its lifecycle (e.g. the active distribution to breeding sites of juvenile hormone analogues by adult female mosquitoes contaminated during the blood-feeding phase). Each method can have its advantage over the other according to the environment and delivery method selected. The mesh structure can thus bind and hold both 'immediate kill' and 'slow kill' pesticidal agents or powder(s) that may have a chemical, physical, or biological mode of action or combination(s) thereof.

Combination of more than one agent is even more effective. In breeding sites mosquito larvae are contended by insect growth regulator(s), which stop(s) their development into adults. Meanwhile the fungal spores picked up by the adult female mosquito grow through the exo-skeleton, which may be weakened by an intensifying agent such as silica, allowing the fungus to enter the body of the insect more easily and grow therein. The fungus itself lowers the resistance of mosquitoes against old and new insecticides by increasing mosquito susceptibility to these. It has been found recently that toxic substances produced by the fungus tend to reduce and even stop the development of malaria parasites or Dengue virus in the mosquito. A mixture of several or all of the mentioned agents is proven very effective in the combat against mosquitoes such as the ones spreading malaria (anophelines), Dengue (Culicines) or other dangerous mosquito-borne diseases.

The affordable and easy to manufacture electrostatic coating is capable of holding and binding usually the powders which include the agents, but only to such extent that efficient transfer of the powder(s) to the arthropod is effected when it lands on and/or makes bodily contact otherwise with the mesh structure that is prepared with that coating. The electrostatic forces applied by the composition on the powders are balanced with that transfer in mind.

Such a mesh structure can easily be coated and processed when in a further embodiment of the invention the electrostatic coating is mixed with a polyurethane suspension and then coated on the mesh structure. Easily spraying the coating followed by drying if necessary completes the job of applying the powders on the mesh structure according to the invention.

In a still further embodiment the mesh structure has a mesh width preventing mosquitoes from flying through, preferably combined with that mesh structure having parts with differing mesh widths, such that further preferred said one or more agents are at least provided on the mesh structure part which has a different mesh width compared to the main mesh structure.

The notion behind this is that, surprisingly, mosquitoes have been found to prefer to land on areas where there is a differential airflow containing among others different concentrations of attractive odours and convection currents. If those areas of different mesh width, which they prefer, are provided with the agent(s) / powder(s) other parts of the structure do not require to have these, which leads to savings of (bio)active compounds without negatively influencing the effectiveness of the pest control.

Several further measures can be taken to lure arthropods in an attempt to get these to land, walk, crawl, or rest in or on specifically designed and treated areas, such as parts of the mesh structure which have different colours and/or contrasts and/or temperatures and/or humidity levels. In particular, mesh structure parts having a differential mesh width having a darker colour and/or a higher temperature attracts blood-feeding arthropods. Either or not combined with the foregoing the mesh structure or if applicable the mesh structure part having a differential mesh width, odours can further increase its contact with arthropods. Human/animal mimicking compound blends like mixtures of ammonia, lactic acid and various carboxylic fatty acids and/or odours that can mimic the response to CO₂ (a known mosquito attractant) such as 1-butanol or 2-butanone can further increase the attractiveness of mesh structures and/or odours that entice a stronger landing response such as oxo-carboxylic acids like 2-oxopentanoic acid and/or with sensitization or arrestment enhancing cues like 2-phenylethanol or linalool oxide when added to said mesh structures can increase the attractiveness even further. As the case may be certain types of mosquitoes are attracted more dominantly by these landing cues than others.

At present the mesh structure and screen having such a structure according to the invention and the way they are used according to the invention will be elucidated further together with their additional advantages while reference is being made to the appended drawings, wherein similar components are being referred to by means of the same reference numerals. In the drawing:
Fig. 1 shows a schematic cross section of a simple dwelling whose walls are made of clay, mud, or loam, and the roof consists of grass thatch, for indicating possible positions for installing the mesh structure according to the invention;
Fig. 2A shows a dwelling similar to Fig. 1 whose walls are made of bricks and roof consists of corrugated iron sheets; Fig 2B shows a detail of a wall of Fig. 1 and Fig 2C shows a front view of the dwelling of Fig. 2A;
Figs 3A, 3B, 3C and 3D shows possible embodiments of mesh structures according to the invention;
Fig. 4A shows side views of a brick wall with an opening holding an insert including the mesh structure of the invention; and Figs. 4B and 4C show front view details of the insert and wall of Fig. 4A; and
Figs 5A and 5B shows a preferred position of the mesh structure according to the invention as part of a bednet, and a mesh structure according to the invention in the form of a flounce.

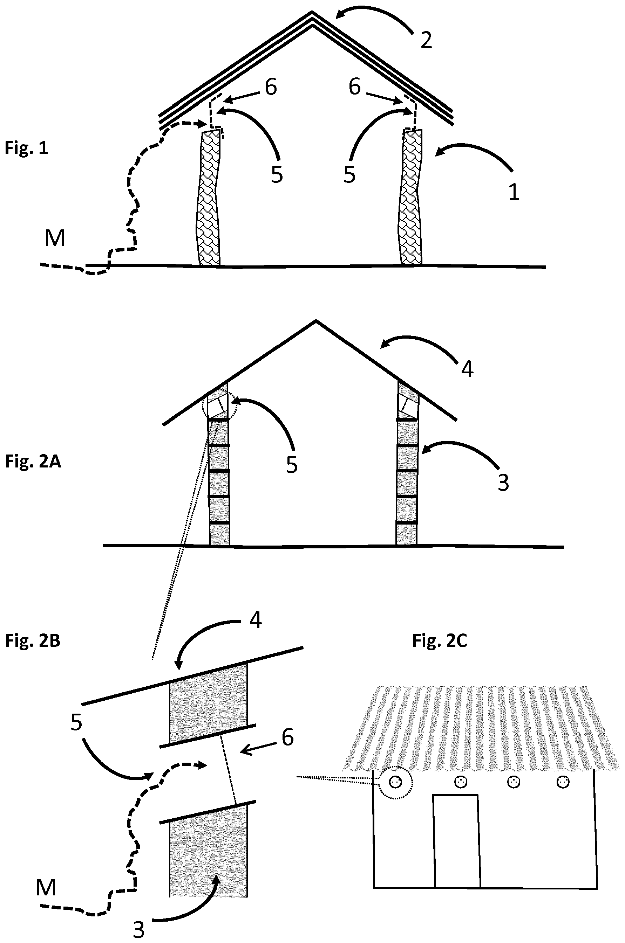

Fig. 1 shows a schematic cross section of a simple dwelling, hut, house, shed or other accommodation for man or livestock whose walls 1 are made of clay, mud, or loam, with a roof 2 consisting of grass thatch. A similar dwelling is shown in Fig 2A whose walls are made of bricks 3 and its roof 4 consists of corrugated iron sheets. Other wall materials or house designs are similarly suitable for incorporation of the mesh structures described hereafter. In the wall 1 or bricks 3 there are openings, which may be considered windows, vent-holes or the like, also known as eaves, all referred to with reference numeral 5. Such openings can be part of the normal construction of houses, as shown in Fig. 1 or be created specifically for ventilation and/or insertion of the mesh structure as shown in Figs. 2A in the form of an 'eave tube' or 'eave brick'. Just to give a general idea the detailed view of the wall 3 in Fig. 2B and the front view of the dwelling of Fig. 2C is given, as these are being used by people mainly in the developing countries, where they suffer from diseases transmitted by insects, in particular flying insects such as mosquitoes. These openings 5 in the walls or between the walls 1, 3 and the roof 2, 4 are meant to provide some ventilation. However flying insects are given the chance to enter the house through these, attracted by human odours and convective heat.

A mesh structure 6 in the form of a gauze, net, cloth, screen, grid or fabric is provided normally having a mesh width preventing mosquitoes M from flying through, thus forming an insect screen of mosquito netting. Practically the mesh width will also be such that air ventilation is secured, resulting in maintained attraction as explained above. The mesh structure 6 is coated, impregnated, or treated otherwise with one or more arthropod-killing agents chosen from, but not limited to, the group comprising WHO recommended insecticides effective against mosquitoes and flying insects, as found on their website (http://www.who.int/whopes/Insecticides_IRS_Malaria_09.pdf).

The chosen agents(s) may differ from the class of compounds used for bednet impregnation (i.e. synthetic pyrethroids), which may exert a deterrent or excito-repellent effect; the mesh structure presented here is specifically designed to induce contact with the target pest. By placement out of reach of humans i.e. just under the roof, the doses of compound(s) may be similar to, or might even be higher, than concentrations recommended by WHO for indoor residual spraying. Alternatively, compounds used for pest control but not yet incorporated in public health may be used in such circumstances.

The agents in the form of powders are well adhered to the mesh structure 6 by coating the structure with an electrostatic coating in the form of a platinum complex-containing silicone composition whereon said one or more powders are provided.

Such a coating and its composition is disclosed in WO-2009048324 and some of the agents are mentioned per se in applicants at present to be published PCT/NL2013/050467. Both these documents are considered to be incorporated herein by reference thereto.

The platinum complex-containing silicone composition can also be singularly applied on various substances such as, but not limited to, clay, mud, loam, wood, brick, plastic, iron, and fabrics and as such create the possibility of treating structures, creating treated point sources, in and/or outside the home where mosquitoes can be contaminated upon bodily contact with the powdered coating. The attractiveness of such substances can again be enhanced by the aforementioned methods of using different colours, contrasts, odours, temperature and/or humidity differentials.

For the sake of disclosure some WHO insecticide compounds and formulations and their dosages, for use in suitable form or as coatings are listed in the Table hereunder.

| WHO Insecticides | Dosage: Grams of active ingredient per m² |
|---|---|
| DDT WP | 1-2 |
| Malathion WP | 2 |
| Fenitrothion WP | 2 |
| Pirimiphos-methyl WP & EC | 1-2 |
| Bendiocarb WP | 0.1-0.4 |
| Propoxur WP | 1-2 |
| Alpha-cypermethrin WP & SC | 0.02-0.03 |
| Bifenthrin WP | 0.025-0.05 |
| Cyfluthrin WP | 0.02-0.05 |
| Deltamethrin WP, WG | 0.02-0.025 |
| Etofenprox WP | 0.1-0.3 |
| Lambda-cyhalothrin WP, CS | 0.02-0.03 |

| | |
|---|---|
| WP= wettable powder; EC= emulsifiable concentrate; SC= suspension concentrate; WG= water dispersible granule; CS= capsule suspension | |

In order to apply the electrostatic coating on the mesh structure 6 the coating is mixed with a polyurethane suspension and then coated on the mesh structure. Thereafter said powders are simply sprayed or otherwise applied on the electrostatic coating, which may have the form of the aforementioned mixture.

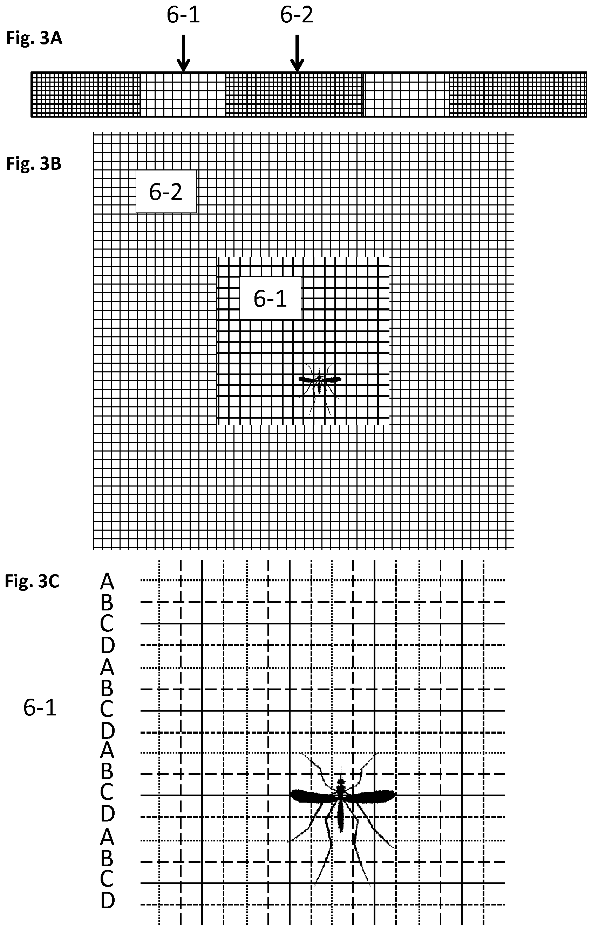

Figs. 3A-C show embodiments of the mesh structure 6 having parts 6-1 and 6-2 with different mesh widths (see Figs. 3A and 3B). The structure 6-1 having a differential mesh width is surprisingly found to attract more mosquitoes as long as the airflow there through is different than in neighbouring parts 6-1 having other mesh widths. If the agent(s) are at least provided on the mesh structure part 6-1, (Fig. 3B) which has a larger mesh width, then the amount of agent(s) needed can be reduced without jeopardising the effectiveness of killing or contamination of landing target pests, which pick up and carry the agent(s) from the structure 6-1 with them. Giving the parts 6-1 a darker colour than the part 6-2, and/or increasing contrast between these parts makes the contrast area increasingly attractive for certain pests, and/or locally raising the temperature of for example the part 6-1 such as by means of well-known PCM materials, which can maintain a temperature differential for prolonged periods of time, result in attraction of for instance mosquitoes, such as malaria mosquitoes.

Similar attraction arises when the mesh structure 6 concerned is treated with an attractive odour blend, such as blends of ammonia, lactic acid and one or more carboxylic acids, and/or with landing inducing odours, such as oxocarboxylic acids (2-oxopentanoic acid) and/or with CO₂ mimicking compounds, such as 1-butanol, 2-butanone and/or with sensitization or arrestment enhancing cues like 2-phenylethanol or linalool oxide.

In addition, the mesh structure 6-1 may consist of yarns impregnated or coated with different agents (see Fig. 3C, showing yarn areas treated with suitable agents indicated A-D) in order to enhance the exposure of the target pest to multiple agents at once, thereby reducing the likelihood of the target pest developing resistance to individual agents. Alternatively, rather than treating individual yarns, the mesh structure may be treated with different agents through, for example, screen printing resulting in dots, stripes or other patterns of the said agents on the mesh with the same goal in mind.

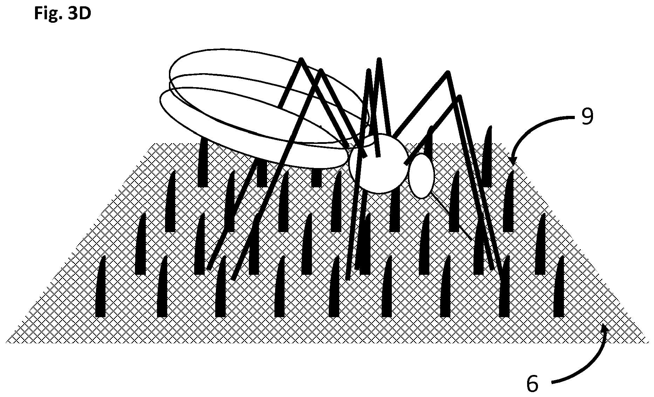

The mesh structure 6 may be further enhanced through the provision of extending or hair-like structures 9 such as shown in Fig. 3D which rise from the surface of the structure 6. If the agent (s) is (are) applied this increases the likelihood of the target pest making bodily contact with the agents applied on these structures 9 and mesh 6 in excess of the normal contact with the legs when sitting, crawling or landing. This is because such structures dramatically increase the contact surface area for the target pest when landing, crawling, walking, or resting on a mesh 6 created in such manner. Such structures 9, which may consist of nylon, cotton, polyester, wool, etc., may be augmented with features (e.g. colour, contrast, odours) to enhance their attractiveness to the target pest. For example the structures 9 may be applied to the mesh 6 in a permanent manner using techniques like flocking, or be bound to the mesh using electrostatic forces, which enables removal and re-application of the said structures 9, such as hair-like structures.

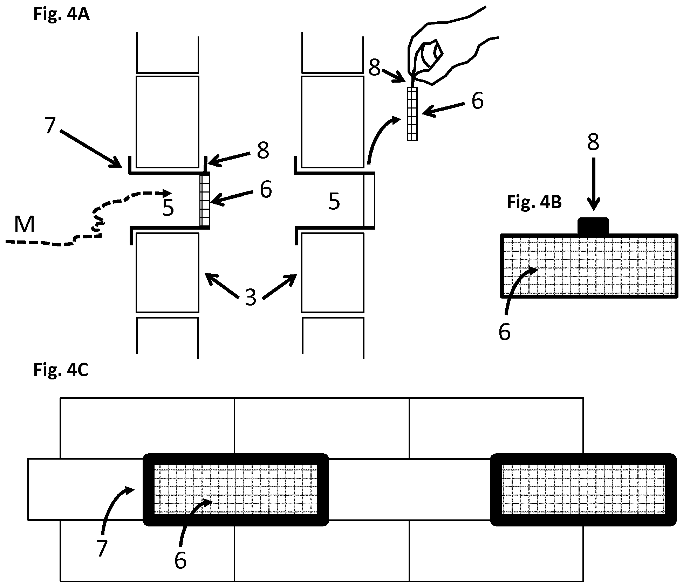

Fig. 4A shows a side view of a wall 3 having an eave or opening 5 holding an insert 7 which in turn holds the removable mesh structure 6. Fig. 4A exemplifies the use of the mesh structure 6 which can easily be removed from the insert/holder 7 by pulling a tag 8 which is attached to the structure 6. This minimises human exposure to the agent(s) the mesh is treated with. Fig. 4B shows a front view of the structure 6 and tag 8. The insert 7 holding the mesh structure 6 is dimensioned to be installed in the air vent-hole 5 in the wall 3 of the accommodation shown in Figs. 2A-C. The insert 7 is in this case rectangular to fit according to standard brick sizes but shapes and forms of the insert may also be circular, square, or be of any other shape.

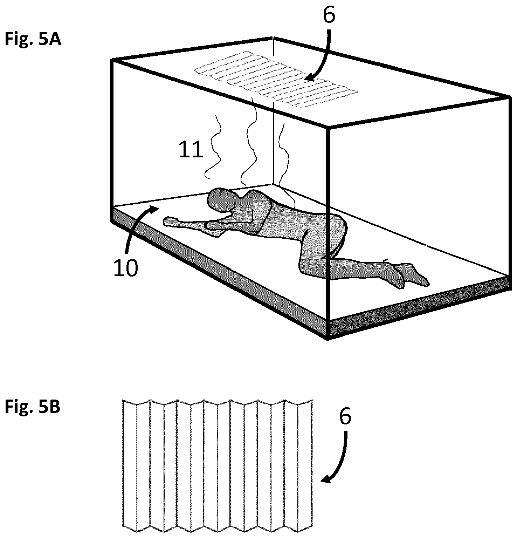

Fig. 5A shows a human-occupied bednet 10 that may or may not be impregnated with insecticide with a possible position of the mesh structure 6 integrated into the bednet or suspended on top of it. Human odours and convection currents 11 draw the target pest to the position directly above the human where the mesh structure 6 is positioned. The mesh structure 6 in this case can consist of regular netting, cloth, screen, grid or fabric, with or without holes, impregnated or treated otherwise with one or more bioactive compounds, and augmented with attractive features described above. Moreover, depending on the target pest, the position, shape, and size of the mesh structure may differ. Again colours, created contrast areas, raised temperature, odours, mimickers, cues and mentioned acids and similar substances can be used to increase attraction of the target pest to the mesh structure 6 in order to contaminate and/or infect them with the compounds described above upon bodily contact therewith. Structure 6 may also be incorporated into bednets of different shape, like conical nets. The structure in the form of mesh structure 6 in different shapes and forms could equally well be fixed inside or outside the house at other places frequented by the target pest.

The structure 6 shown in Fig. 5B has an extended contact surface treated with agent(s) resulting in increased contamination probability of contact between the insect and the treated surface. The surface may be pleated, folded, and/or may have extensions such as hair-like structures.

Use of the mesh structure 6 in this way can be made using the WHO-recommended insecticides in dosages equal to or higher than the WHO prescribed maximum dosage, as well insecticides from other novel insecticide classes (further denoted below) and thus supposed to be more effective, but nevertheless not dangerous, because the compounds hold to the structure or are incorporated therein and are only removed there from by the target pest when leaving the structure or alternatively get killed shortly after exposure.

The compounds shown in Appendix 1 are considered appropriate for coating, impregnation, or other application methods of the mesh structure 6, either individually or in mixtures thereof.

### APPENDIX 1

*1) Organochlorines*
   Aldrin
   Chlordane
   Chlordecone
   DDT
   Dieldrin
   Endosulfan
   Endrin
   Heptachlor
   Hexachlorobenzene
   Lindane (gamma-hexachlorocyclohexane)
   Methoxychlor
   Mirex
   Pentachlorophenol
   TDE
*2) Organophosphates*
   Acephate
   Azinphos-methyl
   Bensulide
   Chlorethoxyfos
   Chlorpyrifos
   Chlorpyriphos-methyl
   Diazinon
   Dichlorvos (DDVP)
   Dicrotophos
   Dimethoate
   Disulfoton
   Ethoprop
   Fenamiphos
   Fenitrothion
   Fenthion
   Fosthiazate
   Malathion
   Methamidophos
   Methidathion
   Mevinphos
   Monocrotophos
   Naled
   Omethoate
   Oxydemeton-methyl
   Parathion
   Parathion-methyl
   Phorate
   Phosalone
   Phosmet
   Phostebupirim
   Phoxim
   Pirimiphos-methyl
   Profenofos
   Terbufos
   Tetrachlorvinphos
   Tribufos
   Trichlorfon
*3) Carbamates*
   Aldicarb
   Bendiocarb
   Carbofuran
   Carbaryl
   Dioxacarb
   Fenobucarb
   Fenoxycarb
   Isoprocarb
   Methomyl
   2-(1-Methylpropyl)phenyl methylcarbamate
*4) Pyrethroids*
   Allethrin
   Bifenthrin
   Cyhalothrin, Lambda-cyhalothrin
   Cypermethrin
   Cyfluthrin
   Deltamethrin
   Etofenprox
   Fenvalerate
   Permethrin
   Phenothrin
   Prallethrin
   Resmethrin
   Tetramethrin
   Tralomethrin
   Transfluthrin
*5) Neonicotinoids*
   Acetamiprid
   Clothianidin
   Imidacloprid
   Nitenpyram
   Nithiazine
   Thiacloprid
   Thiamethoxam
*6) Ryanoids*
   Chlorantraniliprole
   Cyantraniliprole
   Flubendiamide
*7) Insect growth regulators*
   Benzoylureas
   Diflubenzuron
   Flufenoxuron
   Methoprene
   Hydroprene
   Tebufenozide
   Pyriproxyfen
*8) Plant derived insecticides*
   Anabasine
   Anethole
   Annonin
   Asimina
   Azadirachtin
   Caffeine
   Carapa
   Cinnamaldehyde
   Cinnamon leaf oil
   Cinnamyl acetate
   Citral
   Deguelin
   Derris
   Desmodium caudatum
   Eugenol
   Linalool
   Myristicin
   Neem
   Nicotiana rustica
   Oregano oil Polyketide
   Pyrethrum
   Quassia
   Ryanodine
   Tetranortriterpenoid
   Thymol
*9) Biologicals*
   Bacillus sphaericus
   Bacillus thuringiensis
   Bacillus thuringiensis aizawi
   Bacillus thuringiensis israelensis
   Bacillus thuringiensis kurstaki
   Bacillus thuringiensis tenebrionis
   Nuclear Polyhedrosis virus
   Granulovirus
   Spinosyn A
   Spinosyn D
   Beauveria bassiana
   Metharizium anisopliae
*10) Others*
   Diatomaceous earth/ synthetic silica
   Borate
   Borax
   Boric Acid

## Claims

1. A mesh structure (6) in the form of a gauze, net, cloth, screen, grid or fabric on to which one or more chemical, physical or biologically active agents are provided comprising:
- WHO-recommended insecticides effective against mosquitoes and other flying insects, and/or
- insecticides from other insecticide classes than recommended by WHO, and/or
- an insect growth regulator effective against larvae and/or adults, such as pyriproxyfen effective against mosquitoes, and/or
- an insect-killing fungus, such as *Beauveria bassiana,* and/or *Metarhizium anisopliae,* and/or
- an intensifying agent, such as non-synthetic or synthetic silica, or diatomaceous earth which affects the insect exoskeleton, notably the cuticula, and
that the mesh structure (6) is coated with an electrostatic coating in the form of a platinum complex-containing silicone composition whereon said one or more agents are provided.

2. The mesh structure (6) according to claim 1, whereby the electrostatic coating is mixed with a polyurethane suspension and then coated on the mesh structure (6); alternatively this coating can be sprayed/administered directly on to other substrates and subsequently bind the agents.

3. The mesh structure (6) according to claim 1 or 2, whereby said one or more agents are sprayed, sieved, shaken, flocked or otherwise applied on the electrostatic coating.

4. The mesh structure (6) according to any one of the claims 1-3, whereby the mesh structure (6) has a mesh width which is such that in use it prevents specimens of the target pest, notably mosquitoes and other flying or crawling insects, from flying or crawling through.

5. The mesh structure (6) according to any one of the claims 1-4, whereby the mesh structure (6) has parts (6-1, 6-2) with differing mesh widths.

6. The mesh structure (6) according to claim 5, whereby said one or more agents are at least provided on the part (6-1) of the mesh structure (6; 6-1, 6-2) that attracts more specimens of the target pest than the other part (6-2) of the mesh structure (6; 6-1, 6-2) which has a different width.

7. The mesh structure (6) according to claim 5 or 6, whereby the preferred parts (6-1) of the mesh structure (6; 6-1, 6-2) have differing: colours and/or contrasts and/or temperatures.

8. The mesh structure (6) according to any one of the claims 5-7, whereby the preferred part(s) (6-1) of the mesh structure has a darker colour and/or a higher temperature and/or humidity level which attract the target pests, notably mosquitoes.

9. The mesh structure (6) according to any one of the claims 1-8, whereby the mesh structure (6; 6-1, 6-2), or if applicable, the mesh structure part (6-1) preferred by the target pest is treated with attractive substances e.g. a mosquito-attracting odour blend, such as blends of ammonia, lactic acid and one or more carboxylic acids, and/or with landing inducing odours, such as oxo-carboxylic acids (2-oxopentanoic acid) and/or with CO₂ mimicking compounds, such as 1-butanol, 2-butanone and/or with sensitization or arrestment enhancing cues like 2-phenylethanol or linalool oxide.

10. An insert (7) comprising a mesh structure (6) according to any one of the claims 1-9, and dimensioned for being installed in or over an air vent-hole or an eave (5) present in a wall (1; 3) or in a dwelling, hut, house, shed or other accommodation for man and/or livestock.

11. Use of the mesh structure (6) according to any one of the claims 1-10 which is suspended on or integrated in a bednet (10), inside or outside of the accommodation (1, 2; 3, 4).

12. Use of the mesh structure (6) according to claim 11, whereby the high hanging part of the mesh structure is black or dark, and the remainder is whiter than the high hanging part and/or whereby the high hanging part has a different mesh width (6-1) than the remainder of the mesh structure (6-2).

13. Use of the mesh structure (6) of claim 11 or 12, whereby the agent(s) on the mesh structure (6-1) preferred by the insects to rest, crawl, or land on, is (are) from a different insecticide class as is used for the remainder (6-2) of the mesh structure (6) which is provided with a WHO-recommended insecticide.

14. Use of the mesh structure (6) according to any one of the claims 11-13, whereby the mesh structure is pleated or folded, and/or the surface of the mesh structure is provided with extensions such as hair-like structures (9) extending from the surface.

## Patentansprüche

1. Netzgebilde (6) in Form einer Gaze, eines Netzes, Tuchs, Fliegengitters, Gitters oder Textilstoffs, auf der/dem ein oder mehrere chemisch, physikalisch oder biologisch aktive Mittel bereitgestellt werden, umfassend:
- von der WHO empfohlene Insektizide, die gegen Mücken und andere fliegende Insekten wirksam sind und/oder
- Insektizide aus anderen Insektizidklassen als denjenigen, die von der WHO empfohlen sind und/oder
- einen Insektenwachstumsregulator, der gegen Larven und/oder Adulte wirksam ist, wie Pyriproxyfen, das gegen Mücken wirksame ist und/oder
- einen Insekten tötenden Pilz wie Beauveria bassiana und/oder Metarhizium anisopliae und/oder
- ein Intensivierungsmittel wie beispielsweise nichtsynthetisches oder synthetisches Siliciumdioxid oder die Diatomeenerde, die sich auf das Insektenexoskelett, insbesondere die Cuticula, auswirken und
dass das Netzgebilde (6) mit einer elektrostatischen Beschichtung in Form einer Platinkomplex enthaltenden Siliconzusammensetzung beschichtet ist, worauf das eine oder die mehreren Mittel bereitgestellt sind.

2. Netzgebilde (6) nach Anspruch 1, wobei die elektrostatische Beschichtung mit einer Polyurethansuspension gemischt und dann schichtförmig auf das Netzgebilde (6) aufgebracht ist; alternativ kann diese Beschichtung direkt auf andere Substrate gesprüht/aufgebracht werden und daraufhin die Mittel binden.

3. Netzgebilde (6) nach Anspruch 1 oder 2, wobei das eine oder die mehreren Mittel gespritzt, gesiebt, geschüttelt, geflockt oder auf andere Weise auf die elektrostatische Beschichtung aufgebracht werden.

4. Netzgebilde (6) nach einem der Ansprüche 1-3, wobei das Netzgebilde (6) eine Schlingenbreite aufweist, die derart ist, dass sie beim Einsatz Exemplare des Zielungeziefers, insbesondere Mücken und andere fliegende oder kriechende Insekten am Hindurchfliegen oder -kriechen hindert.

5. Netzgebilde (6) nach irgendeinem der Ansprüche 1-4, wobei das Netzgebilde (6) Teile (6-1, 6-2) mit verschiedenen Schlingenbreiten aufweist.

6. Netzgebilde (6) nach Anspruch 5, wobei das eine oder die mehreren Mittel mindestens an dem Teil (6-1) des Netzgebildes (6; 6-1,6-2) bereitstellt sind, der mehr Exemplare des Zielungeziefers anzieht als der andere Teil (6-2) des Netzgebildes (6; 6-1,6-2), der eine andere Breite aufweist.

7. Netzgebilde (6) nach Anspruch 5 oder 6, wobei die bevorzugten Teile (6-1) des Netzgebildes (6; 6-1,6-2) verschiedene Farben und/oder Kontraste und/oder Temperaturen aufweisen.

8. Netzgebilde (6) nach irgendeinem der Ansprüche 5-7, wobei der bevorzugte Teil/die bevorzugten Teile (6-1) des Netzgebildes eine dunkleren Farbe und/oder eine höhere Temperatur und/oder ein höheres Feuchtigkeitsniveau aufweist/aufweisen, die das Zielungeziefer, insbesondere Mücken, anziehen.

9. Netzgebilde (6) nach irgendeinem der Ansprüche 1-8, wobei das Netzgebilde (6; 6-1,6-2) oder, falls zutreffend, der Netzgebildeteil (6-1), der von dem Zielungeziefer vorgezogen wird, mit Anziehungssubstanzen, z.B. einer mückenanziehenden Farbmischung wie beispielsweise Mischungen von Ammoniak, Milchsäure und einer oder mehreren Carbonsäuren und/oder mit landeinduzierenden Farben wie beispielsweise Oxocarbonsäuren (2-Oxopentansäure) und/oder mit CO₂ nachahmenden Verbindungen wie 1-Butanol, 2-Butanon und/oder mit sensibilisierungs- oder aufenthaltsverbessernden Auslösereizen wie 2-Phenylethanol oder Linalooloxid behandelt wird.

10. Einsatz (7) umfassend ein Netzgebilde (6) nach einem der Ansprüche 1-9 und der für das Installieren in oder über einem Belüftungsloch oder einer Traufe (5), die in einer Wand (1; 3) oder in einer Wohnstätte, einer Hütte, einem Haus, einem Schuppen oder anderen Unterkunft für Mensch und/oder Vieh vorliegt, dimensioniert ist.

11. Verwendung des Netzgebildes (6) nach irgendeinem der Ansprüche 1-10, die an einem Bettnetz (10) innerhalb oder außerhalb der Unterkunft (1, 2; 3, 4) suspendiert oder darin integriert ist.

12. Verwendung des Netzgebildes (6) nach Anspruch 11, wobei der hohe Aufhängteil des Netzgebildes schwarz oder dunkel ist und der Rest weißer als der hohe Aufhängteil ist und/oder wobei der hohe Aufhängteil eine andere Schlingenbreite (6-1) als der Rest des Netzgebilde (6-2) aufweist.

13. Verwendung des Netzgebildes (6) nach Anspruch 11 oder 12, wobei das/die Mittel an dem Netzgebilde (6-1), das von den Insekten zum Verbleiben, Kriechen oder darauf Landen vorgezogen wird, zu einer anderen Insektizidklasse gehört/gehören als diejenige, die für den Rest (6-2) des Netzgebildes (6) verwendet wird, das mit einem von der WHO empfohlenen Insektizid versehen ist.

14. Verwendung des Netzgebildes (6) nach irgend einem der Ansprüche 11-13, wobei das Netzgebilde plissiert oder gefaltet ist und/oder die Oberfläche des Netzgebildes mit Verlängerungen, wie haarähnlichen Gebilden (9), ausgestattet ist, die sich von der Oberfläche aus erstrecken.

## Revendications

1. Structure de mailles (6) de la forme d'une gaze, d'un filet, d'un tissu, d'un écran d'une grille ou d'une étoffe sur laquelle sont présents un ou plusieurs agents actifs de manière chimique, physique ou biologique comprenant :
- des insecticides recommandés par l'OMS efficaces contre les moustiques et d'autres insectes volants, et/ou
- des insecticides à partir d'autres classes insecticides que celles recommandées par l'OMS, et/ou
- un régulateur de croissance d'insectes efficace contre des larves et/ou des adultes, tel que du pyriproxyfène efficace contre les moustiques, et/ou
- un champignon tueur d'insectes tel que *Beauveria bassiana,* et/ou *Metarhizium anisopliae,* et/ou
- un argent d'intensification, tel qu'une silice non synthétique ou synthétique, ou de la terre diatomée qui affecte l'exosquelette des insectes, notablement la cuticule, et
que la structure de mailles (6) est enduite d'un revêtement électrostatique de la forme d'une composition de silicone contenant un complexe de platine sur laquelle ledit sont présents un ou plusieurs agents.

2. Structure de mailles (6) selon la revendication 1, selon laquelle le revêtement électrostatique est mélangé à une suspension de polyuréthane et ensuite enduit sur la structure de mailles (6); alternativement ce revêtement peut être vaporisé/administré directement sur d'autres substrats et peut se lier subséquemment aux agents.

3. Structure de mailles (6) selon la revendication 1 ou la revendication 2, selon laquelle ledit un ou plusieurs agents sont vaporisés, tamisés, agités, floques ou autrement appliqués sur le revêtement électrostatique.

4. Structure de mailles (6) selon l'une quelconque des revendications 1 à 3, selon laquelle la structure de mailles (6) possède une largeur de mailles qui est telle que lorsqu'elle est utilisée, elle empêche les spécimens de l'espèce nuisible, notablement les moustiques et autres insectes volants ou rampant, de voler ou de ramper à travers celle-ci.

5. Structure de mailles (6) selon l'une quelconque des revendications 1 à 4, selon laquelle la structure de mailles (6) possède des parties (6-1, 6-2) avec différentes largeurs de mailles.

6. Structure de mailles (6) selon la revendication 5, selon laquelle ledit un ou plusieurs agents sont aux moins présents sur la partie (6-1) de la structure de mailles (6 ; 6-1, 6-2) qui attire le plus de spécimens de l'espèce nuisible cible que l'autre partie (6-2) de la structure de mailles (6 ; 6-1, 6-2) qui possède une largeur différente.

7. Structure de mailles (6) selon la revendication 5 ou la revendication 6, selon laquelle les parties préférées (6-1) de la structure de mailles (6 ; 6-1, 6-2) possèdent des aspects différents : couleurs et/ou contrastes et/ou températures.

8. Structure de mailles (6) selon l'une quelconque des revendications 5 à 7, selon laquelle la (les) partie(s) préférée(s) (6-1) de la structure de mail possède(nt) une couleur plus sombre et/ou une température plus élevée et/ou un niveau d'humidité qui attire les espèces nuisibles cibles, notablement les moustiques.

9. Structure de mailles (6) selon l'une quelconque des revendications 1 à 8, selon laquelle la structure de mailles (6 ; 6-1 ; 6-2), ou le cas échéant, la partie de structure de mailles (6-1) que l'espèce nuisible cible préfère est traitée avec des substances attrayantes, par exemple un mélange d'odeurs attirant les moustiques tels que des mélanges d'ammoniaque, d'acide lactique et d'un ou de plusieurs acides carboxyliques, et/ou avec des odeurs induisant l'atterrissage, telles que les acides oxo-carboxyliques (acide 2-oxopentanoïque) et/ou avec des composés mimant le CO₂, tels que le 1-butanol, la 2-butanone et/ou avec un signal améliorant la sensibilisation ou la rétention telle que le 2-phényléthanol ou l'oxyde de linalool.

10. Encart (7) comprenant une structure de mailles (6) selon l'une quelconque des revendications 1 à 9, est dimensionné pour être installé dans ou sur un trou de ventilation ou un avant-toit (5) présent dans un mur (1 ; 3) ou dans une habitation, une hutte, une maison, un abri ou d'autres logements destinés à l'homme et/ou au bétail.

11. Utilisation de la structure de mailles (6) selon l'une quelconque des revendications 1 à 10 qui est suspendue sur ou intégrée à une moustiquaire (10), à l'intérieur ou à l'extérieur du logement (1, 2 ; 3, 4).

12. Utilisation de la structure de mailles (6) selon la revendication 11, selon laquelle la partie d'accroche haute de la structure de mailles est noire ou sombre, et le reste est plus blanc que la partie d'attache haute et/ou selon laquelle la partie d'attache haute possède une largeur de mailles différente (6-1) que le reste de la structure (6-2).

13. Utilisation de la structure de mailles (6) selon la revendication 11 ou la revendication 12, selon laquelle l'agent/les agents sur la structure de mailles (6-1) sur laquelle les insectes préfèrent se reposer, ramper ou atterrir, provient/proviennent d'une classe insecticides différente que celle utilisée pour le reste (6-2) de la structure de mailles (6) qui est fournie avec un insecticide recommandé par l'OMS.

14. Utilisation de la structure de mailles (6) selon l'une quelconque des revendications 11 à 13, selon laquelle la structure de mailles est plissée ou pliée, et/ou la surface de la structure de mailles est fournie avec des extensions telles que des structures semblables aux cheveux (9) s'étendant depuis la surface.
